# EUROPEAN PATENT APPLICATION

(11) **EP 2 306 361 A1**
(43) Date of publication of application: **06.04.2011**
(21) Application number: 09305833.7
(22) Date of filing: 11.09.2009
(51) Int. Cl.: G06F 21/00

(54) **Apparatus, system and method for secure password management**

(71) Applicant: Thomson Licensing, 92130 Issy-les-Moulineaux (FR)
(72) Inventor: Diehl, Eric, 92648, Boulogne cedex (FR); Onno, Stéphane, 92648, Boulogne cedex (FR)
(74) Representative: Berthier, Karine

(57) **Abstract**

A password management system (100) comprising a storage device (110) for storing passwords and a password application (121) being executed on an external device (120). The password application (121) receives a request for a password (312, 322). The request may come from a user and be for a generic password (312) or from a program and be for a program specific password (322). The request is forwarded to the storage device (110) that after authentication of the password application (121) and the user returns the requested password to the password application (121) that provides the password to the requesting party. Also provided are a storage device (110) and a method.

## Description

### TECHNICAL FIELD

The present invention relates generally to secure management of secret information, and more particularly to a device for storing passwords and the like.

### BACKGROUND

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

Given the large number of passwords that a user may have, the user must have some way to retrieve these passwords when necessary. As passwords can be very valuable, the passwords should preferably be kept secure.

There are four main methods to manage passwords:
- The user may memorize the passwords. This may however prove difficult, particularly for 'secure' passwords such as random strings of characters, e.g. hO_f29u;D.
- Some Internet browsers provide memorization of passwords for visited sites. A master pass phrase is needed to access the stored passwords. An example is "Master password," MozillaZine Knowledge Base; http://kb.mozillazine.org/Master_password. However, use of this solution requires access to the particular Internet browser, which limits its usefulness.
- Some computer (or mobile device) applications manage a set of passwords. The passwords can only be accessed on the device hosting the application.
- The passwords may be stored in remote servers and accessed by web services. This requires an Internet connection to access passwords and also raises the issue of whether these sites may be trusted and whether they are secure against hacking.

It can therefore be appreciated that there is a need for a solution that overcomes at least some of the problems of the prior art. The present invention provides such a solution.

### SUMMARY OF INVENTION

In a first aspect, the invention is directed to a password management system comprising a storage device for storing passwords comprising at least an item of secret information, and a password application being executed on an external device. The storage device comprises an authentication unit adapted to authenticate a user, an interface for communication with the external device, secure memory for storing at least one password, and a processor. The processor is adapted to authenticate the password application, receive from the password application a request for a password, retrieve at least the item of secret information of the requested password from the secure memory, and deliver at least the retrieved item of secret information to the password application after successful authentication of the user and of the password application. The password application is adapted to receive a request for a password from a requester, forward the request to the storage device, authenticate itself to the processor of the storage device, receive at least the item of secret information from the storage device and forward at least the item of secret information to the requester.

In a first preferred embodiment, the authentication unit is a biometrics reader. It is advantageous that the biometrics reader is a fingerprint reader and that the secure memory comprises memory space for storing fingerprint data.

In a second preferred embodiment, the interface is a Bluetooth™ interface.

In a third preferred embodiment, the requester is a program application on a remote device functionally connected to the external device, the request comprising an identifier of the program application.

In a fourth preferred embodiment, the secure memory further comprises memory space storing program code for the password application, the program code being intended for upload on an external device that does not implement the password application.

In a second aspect, the invention is directed to a storage device for storing passwords comprising at least an item of secret information. The storage device comprises an authentication unit adapted to authenticate a user, an interface for communication with the external device, secure memory for storing at least one password, and a processor. The processor is adapted to authenticate a password application being executed on the external device, receive from the password application a request for a password, retrieve at least an item of secret information of the requested password from the secure memory, and deliver at least the retrieved item of secret information to the password application after successful authentication of the user and of the password application. The secure memory further comprises memory space storing program code for the password application, the program code being intended for upload on an external device that does not implement the password application.

In a first preferred embodiment, the authentication unit is a biometrics reader. It is advantageous that the biometrics reader is a fingerprint reader and that the secure memory comprises memory space for storing fingerprint data.

In a second preferred embodiment, the interface is a Bluetooth™ interface.

In a third aspect, the invention is directed to a method for providing an item of secret information. A storage device uploads to an external device a program code package that after installation results in a password application, receives a request for a password from the password application executed on the external device functionally connected to the storage device, authenticates the password application, authenticates a user, retrieves at least the item of secret information corresponding to the requested password from a secure memory, and delivers at least the item of secret information to the password application.

### BRIEF DESCRIPTION OF DRAWINGS

Preferred features of the present invention will now be described, by way of non-limiting example, with reference to the accompanying drawings, in which
Figure 1 illustrates a system according to a preferred embodiment of the present invention;
Figure 2 illustrates, in greater detail than in Figure 1, a password device according to a preferred embodiment of the present invention; and
Figures 3A and 3B respectively illustrate a generic password and an application specific password according to a preferred embodiment of the present invention.

### DESCRIPTION OF EMBODIMENTS

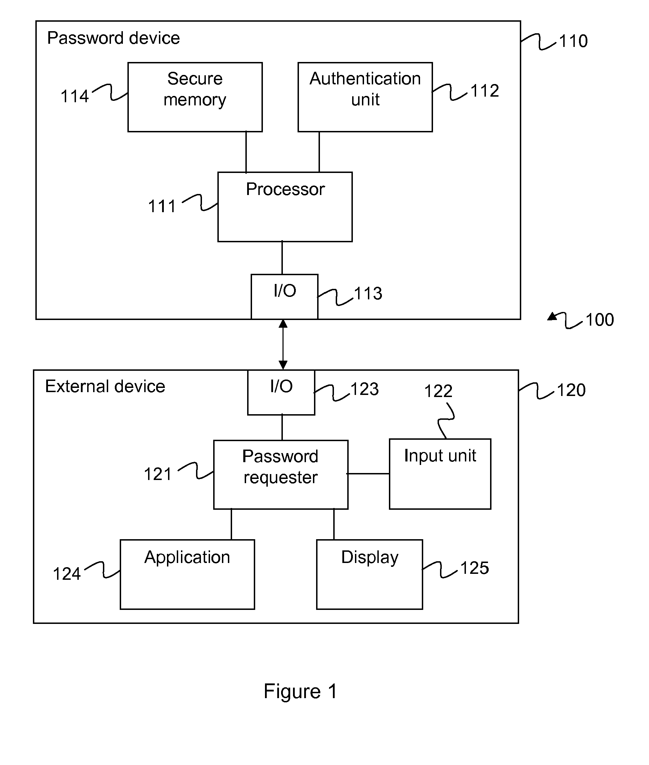

Figure 1 schematically illustrates a system 100 according to a preferred embodiment of the present invention. The system 100 comprises a password device 110 advantageously implemented as a small packaged unit with autonomous power supply (not shown). A main role of the password device is the storage of passwords in a secure memory 114.

In the description, a password is a data structure that comprises at least one identifier, in user readable format, and a string of characters that is the corresponding secret information; the identifier and the string may be identical. The password is advantageously defined by the user.

The password device 110 preferably comprises an authentication unit 112 adapted to provide access to the stored passwords only to authorised users. The authentication unit 112 is advantageously embodied as a biometrics reader, but other kinds of authentication, such as the use of a password, are also possible.

The password device 110 further comprises an interface 113 for communication with an external device 120 that, in a processor, executes a password requester 121, which preferably has three main functions:
- Authenticate itself to the password device 110 so as to ensure that the password device 110 communicates with a genuine password requester 121. There is a risk of information leakage if a password device 110 interacts with a non-genuine password requester, while this is not true in the opposite case.
- Update or provide new password values to the password device, for storage in the secure memory 114.
- Request a password from the password device 110, which retrieves the password from the secure memory 114 and passes at least the corresponding secret information securely, e.g. protected by encryption, to the password requester 121.

The last two functions preferably require successful authentication of the user by the authentication unit 112.

The password device 110 also stores, preferably in the secure memory 114, an installation package for an interface. This installation package is intended to be uploaded to the external device 120 in case it does not implement a password requester. Installation of the installation package results in an installed password requester 121 on the external device 120.

It is envisaged that the password device 110 is adapted to handle two different kinds of passwords: generic passwords and application specific passwords, both of which are explained in detail hereinafter. It will be appreciated that both kinds of passwords are stored in the secure memory 114.

Generic passwords are handled directly by the user. To access a generic password, the user communicates with the password requester 121 via the user interface (e.g. the input unit 122 and the display 125) of the external device 120. Preferably, the password device 110 implements techniques to avoid eavesdropping by malware such as key loggers. The user is then requested to authenticate himself using the authentication unit 112, after which he may view the generic passwords, edit them, and add new generic passwords.

Different from generic passwords, an application specific password is associated with a specific application (or applications) that has a unique identifier. The specific application can interact with the password device 110 through the password requester 121 as follows:
- The specific application performs mutual authentication with the password requester 121. The unique identifier is provided to the password requester 121.
- Upon successful authentication, the password requester 121 forwards the unique identifier to the password device 110.
- The password requester 121 asks the user to confirm that he authorizes the specific application. The user then uses the authentication unit 112 to give this confirmation, thereby authorizing the specific application to access the application specific password that corresponds to the specific application. The specific application can then read or modify the application specific password, or add a new application specific password.

Naturally, a specific application is preferably only able to access the application specific password with which it is associated.

The skilled person will appreciate that the password device 110 is advantageously implemented in portable devices such as mobile phones, Personal Digital Assistants or media players. In this case, it can be preferable to split the password requester 121 into two parts, one that resides on the portable device and handles generic passwords, and one that resides on the external device 120 and handles application specific devices.

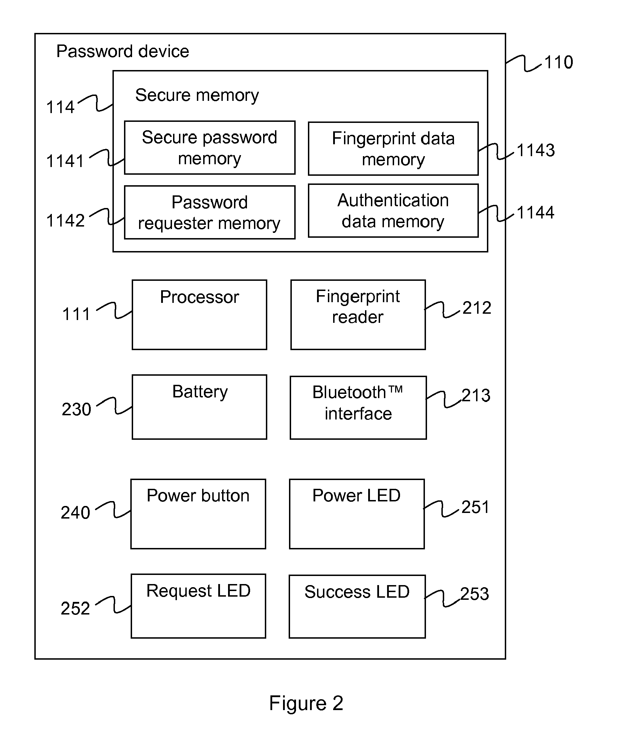

Figure 2 illustrates, in greater detail than in Figure 1, a password device 110 according to a preferred embodiment of the present invention. Internal connections are not shown in the Figure.

The processor 111 handles calculations and communications with the external device 120. It is a microcontroller that holds its random access memory (not shown) and its non-volatile memory (not shown) holds the necessary software.

The secure memory 114, which is accessible only by the processor 111 and preferably implemented as a single memory chip, comprises:
- a secure password memory 1141 adapted to store generic and application specific password data, as already described hereinbefore;
- password requester memory 1142 adapted to store at least one installation package, as already described hereinbefore;
- fingerprint data memory 1143 adapted to store data enabling biometrical authentication using fingerprint data of a user; and
- authentication data memory 1144 adapted to store data enabling authentication.

The authentication unit 112 is preferably a fingerprint reader 212 and the interface 113 preferably a Bluetooth™ interface chip 213, which implies that the external device 120 (not shown; preferably a personal computer) should be capable of handling Bluetooth™ communication. The password device 110 further comprises:
- an exchangeable battery 230;
- a power button 240 for switching on the password device 110 and possibly also for switching it off, but the latter may also be performed, after a time-out, by the processor 111;
- a power LED 251 for indicating when the password device 110 is active;
- a request LED 252 for requesting a user to input a fingerprint; and
- a success LED 253 for indicating successful enrolment of a user.

For authentication, the system 100 advantageously uses any suitable prior art Public Key Infrastructure (PKI) with a hierarchical structure, with the cryptosystem being RSA1024 and the certificates of public keys being compliant with X509.

The root signature key pair is {K_{root_pri}, K_{root_pub}} and there are two subbranches:
- the signature key pair for devices {K_{root-dev_pri}, K_{root-dev_pub}}; and
- the signature key pair for applications {K_{root-appli_pri}, K_{root-appli_pub}}

The password device 110 stores the following keys in the authentication data memory 1144:
- a unique public/private key pair {K_{vault_pri_i}, K_{vault_pub_i}}. K_{vault_pub_i} is signed by K_{root-dev_pri}. This key pair is unique for each password device.
- K_{root-dev_pub}

A password requester 121 holds the following keys:
- a unique public/private key pair {K_{req1-pri_j}, K_{req1_pub-j}}. K_{req1_pub_j} is signed by K_{root-dev_pri}. This key pair is unique for each instance, i.e. password requesters resulting from an installation using the same installation package share this key pair, but each installation package has a different key. The private key is obfuscated in the code.
- a unique public/private key pair {K_{req2_pri_j}, K_{req2_pub_j}}. K_{req2_pub_j} is signed by K_{root-appli_pri}. As for the previous key pair, this key pair is unique for each instance. The private key is obfuscated in the code.
- K_{root_pub}

Each application holds the following keys:
- a unique public/private key pair {K_{appli_pri_i}, K_{appli_pub_i}}. K_{appli_pub_i} is signed by K_{root-appli_pri}. This key pair is unique for a type of application, which is to say that e.g. all extensions, or at least the extensions within a given set of revisions, for Firefox 3.0 would use the same key pair. The keys are linked to a certificate that also contains an application name. The private key is obfuscated in the code.
- K_{root-appli_pub}

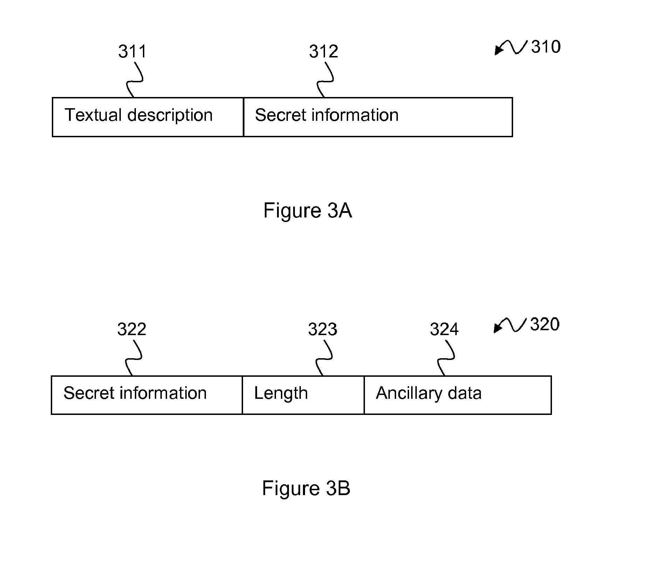

Figure 3A illustrates a stored generic password 310, which comprises a textual description 311 of the password and a character string 312 corresponding to the actual secret information. The characters may be digits, letters and special characters, and there is preferably no length limitation.

To manage a generic password, the user first uses the power button 240 to switch on the password device 110. The password device 110 then sends, via the Bluetooth™ interface 213 a message to the external device 120 in order to establish a Secure Authenticated Channel (SAC) with it, using {K_{vault_pri_i}, K_{vault_pub_i}} and {K_{req1_pri_j}, K_{req1_pub_i}}. If the SAC establishment fails, then the password requester 121 displays an error message on the display 125 of the external device 120 and the management action is aborted.

If the SAC is established, then the password device 120 asks the user for authentication. To that end, the password device 120 blinks the request LED 252 until the user applies his or her finger on the fingerprint reader 212. It is advantageous that also the password requester 121 displays a message about user authentication on the display 125 of the external device 120. The processor 111 compares the data provided by the fingerprint reader 212 with the data stored in the fingerprint data memory 1143. If there is no match, the password device 110 asks its user to authenticate again. If there is a match, the password device 110 grants access to the complete set generic passwords stored in the secure password memory 1141. Thus, the password requester 121 can ask the password device 110 to:
- provide a specific generic password;
- erase a specific generic password;
- modify data from a specific generic password; and
- add a new generic password.

The data exchanged between the password device 110 and the password requester 121 are protected by the SAC.

After a given period of inactivity, the processor 111 turns off the power supply (sleep mode). If the password requester 121 then requires another password, the user must be authenticated again.

In the case of an implementation using an USB-based password device 110, the session could be longer, for example for as long as the password device 110 is plugged into the USB port. Obviously, in this implementation, there would be no need for the battery 230.

Figure 3B illustrates a stored application specific password 320, which comprises a character string 322 corresponding to the actual secret information, preferably without length limitation, a field 323 indicating password ancillary data length; and password ancillary data 324. The latter is a set of bytes provided by the application for which the application specific password 320 applies. The password ancillary data 324 is not necessarily in human readable format and its length is given by the password ancillary data length field 323.

When an application needs access to a memorised passwords, it calls the password requester 121 on the external device 120, and they try to establish a SAC using {K_{appli_pri_i}, K_{appli_pub_i}} and {K_{req2_pri_j}, K_{req2_pub_j}}. If the establishment of SAC fails, then the password requester 121 displays an error message on the display 125 of the external device 120 and the action is aborted. If the establishment of SAC succeeds, then the password requester 121 displays a different message on the display 125 of the external device, informing the user that an application called "application name" wants to access the application specific password associated with it. If the user grants access on the user interface 122 of the external device 120, then the password device 110 and password requester 121 try to establish a SAC using {K_{vault_pri_i}, K_{vault_pub_i}} and {K_{req1_pri_j}, K_{req1_pub_j}}.

If the SAC establishment fails, then the password requester 121 displays an error message on the display 125 of the external device 120 and the action is aborted. If the SAC is successfully established, then the password requester 121 passes the name of the application to the password device 110. The password device 110 asks its user for authentication by blinking the request LED 252 until the user applies a finger to the fingerprint reader 212. The password requester 121 may also display a message requesting the user to authenticate. The processor 111 compares the data provided by fingerprint reader 212 with data stored in the fingerprint data memory 1143. If there is no match, the password device 110 asks the user to authenticate again. If there is a match, the password device 110 grants the application access to the complete set of application specific passwords stored for the application in question. Thus, the application is able to ask the password device 110, via the password requester 121, to:
- provide a specific application specific password for the given application;
- erase a specific application specific password for the given application;
- modify data from a specific application specific password for the given application; and
- add a new specific application specific password for the given application.

The data exchanged are protected by the successive SACs.

It is advantageous for the password requester 121 to memorize the applications to which the user granted access during a session.

After a given period of inactivity, the processor 111 turns off the power supply (sleep mode) and, if applicable, thus ends the session. If the password requester 121 then needs another password, the user must be authenticated again, although it is possible for the application and the password requester 121 to keep their SAC.

In order to be able to use a password device, the user must first be enrolled by it. As a basic assumption, a password device is "owned" by the first enrolled user, otherwise it is inactive (i.e. could be enrolled by anyone). The skilled person will appreciate that there are several alternatives to this assumption. As a non-limitative example of enrolment, a user pushes the power button 240 once when powering the password device 110 for the first time and applies his fingerprint on the fingerprint reader 212. This causes the password device 110 to store the necessary data in the fingerprint data memory 1143. The password device 110 may blink its request LED 252 while waiting the user to apply again his fingerprint to check and terminate the enrolment procedure. Upon successful enrolment, it may turn on the success LED 253.

Before using the password device 110 with an external host 120, a user has to install a password requester 121 thereon. This may be done either by using an installation disk or by uploading the installation package from the requester memory 1142. An external device 120 with a valid installed password requester 121 is preferably able to interact with any password device 110 and vice versa.

In a first variant, the password device 110 could enrol multiple users. This may for example be done to allow several users (member of a family, members of a working group) to use the password device 110 without revealing the passwords lists of the other users. It may also be done to increase security by requiring a sequence of several biometric authentications to display the password phrase of a critical asset. (2 upon 3 or any user combinations), which could be useful for system and urgent recovery of high critical assets.

In a second variant, the password device 110 comprises an integrated display. In this case, management of generic password does not require the presence of an external device 120.

In a third variant, in which the password device 110 is able to interact directly with external applications for which it manages passwords (for example in a mobile phone), the password device 110 implements a password requester; if this is implemented in the processor 111, then there is no need to establish a SAC between them.

In a fourth variant, the password device 110 backs up the secure password memory 1141 in an encrypted file that is passed to a password requester 121 for storage on a convenient support. The encryption key may be either a pass phrase or unique information derived from biometric data.

It will be appreciated that the present invention can offer a convenient way to store a user's passwords. The use of a controlled password requester can allow the use of any computer without fearing that the passwords be eavesdropped by a compromised computer. The connection with applications extends the concept of password unit found in browsers such as Firefox. Nevertheless, it is not linked to a given computer.

Each feature disclosed in the description and (where appropriate) the claims and drawings may be provided independently or in any appropriate combination. Reference numerals appearing in the claims are by way of illustration only and shall have no limiting effect on the scope of the claims.

## Claims

1. A password management system (100) comprising a storage device (110) for storing passwords comprising at least an item of secret information, and a password application (121) being executed on an external device (120),
the storage device (110) comprising:
- an authentication unit (112) adapted to authenticate a user;
- an interface (113) for communication with the external device (120);
- secure memory (114) for storing at least one password (312, 322);
- a processor (111) adapted to:
authenticate the password application (121);
receive from the password application (121) a request for a password (312, 322);
retrieve at least the item of secret information of the requested password (312, 322) from the secure memory (114); and
deliver at least the retrieved item of secret information (312, 322) to the password application (121) after successful authentication of the user and of the password application (121);
the password application (121) being adapted to:
receive a request for a password (312, 322) from a requester;
forward the request to the storage device (110);
authenticate itself to the processor (111) of the storage device (110);
receive at least the item of secret information from the storage device (110); and
forward at least the item of secret information to the requester.

2. The system of claim 1, wherein the authentication unit (112) is a biometrics reader.

3. The system of claim 2, wherein the biometrics reader is a fingerprint reader (212) and the secure memory (114) comprises memory space (1143) for storing fingerprint data.

4. The system of claim 1, wherein the interface (113) is a Bluetooth™ interface.

5. The system of claim 1, wherein the requester is a program application on a remote device functionally connected to the external device (120), the request comprising an identifier of the program application.

6. The system of claim 1, wherein the secure memory (114) further comprises memory space (1142) storing program code for the password application (121), the program code being intended for upload on an external device that does not implement the password application (121).

7. A storage device (110) for storing passwords comprising at least an item of secret information, the storage device comprising:
- an authentication unit (112) adapted to authenticate a user;
- an interface (113) for communication with the external device (120);
- secure memory (114) for storing at least one password (312, 322);
- a processor (111) adapted to:
authenticate a password application (121) being executed on the external device (120);
receive from the password application (121) a request for a password (312, 322);
retrieve at least an item of secret information of the requested password (312, 322) from the secure memory (114); and
deliver at least the retrieved item of secret information (312, 322) to the password application (121) after successful authentication of the user and of the password application (121);
wherein the secure memory (114) further comprises memory space (1142) storing program code for the password application (121), the program code being intended for upload on an external device that does not implement the password application (121).

8. The storage device of claim 7, wherein the authentication unit (112) is a biometrics reader.

9. The storage device of claim 8, wherein the biometrics reader is a fingerprint reader (212) and the secure memory (114) comprises memory space (1143) for storing fingerprint data.

10. The storage device of claim 7, wherein the interface (113) is a Bluetooth™ interface.

11. A method for providing an item of secret information (312, 322), the method comprising the steps, at a storage device (110), of:
- uploading to an external device (120) a program code package that after installation results in a password application (121)
- receiving a request for a password from the password application (121) executed on the external device (120) functionally connected to the storage device (110);
- authenticating the password application (121);
- authenticating a user;
- retrieving at least the item of secret information corresponding to the requested password (312, 322) from a secure memory (114); and
- delivering at least the item of secret information (312, 322) to the password application (121).
